# EUROPEAN PATENT APPLICATION

(11) **EP 1 452 759 A1**
(43) Date of publication of application: **01.09.2004**
(21) Application number: 04002907.6
(22) Date of filing: 10.02.2004
(51) Int. Cl.: F16D 3/04

(54) **Oldham Coupling for motor**

(30) Priority: 12.02.2003 JP 2003033605
(71) Applicant: FANUC LTD, Minamitsuru-gun, Yamanashi 401-0597 (JP)
(72) Inventor: Taniguchi, Mitsuyuki, Gotenba-shi Shizuoka 412-0045 (JP); Mai, Keisuke FANUC Manshonharimomi Room 10-206, Minamitsuru-gun Yamanaschi 401-0511 (JP); Terashima, Hiroya FANUC Manshonharimomi 3511-1, Minamitsuru-gun Yamanaschi 401-0511 (JP)
(74) Representative: Schmidt, Steffen J., Dipl.-Ing.

(57) **Abstract**

A coupling for a motor including a first coupling member, a second coupling member and an intermediate member disposed between the first and second coupling members and slidably engaged with the first and second coupling members. The intermediate member includes a slider main body and an embedded member embedded in the slider main body, whereby the overall rigidity of the intermediate member is increased.

## Description

### BACKGROUND OF THE INVENTION

### 1. Field of the Invention

The present invention relates to a coupling for a motor, in particular, to an Oldham's coupling used for interconnecting a driving shaft and a driven shaft.

### 2. Description of the Related Art

In order to interconnect a driving shaft such as an output shaft of an electric motor and a driven shaft such as an input shaft of a detector, a shaft coupling is usually employed in which radial displacement of the shaft can be tolerated and which is able to absorb possible small errors in shaft center between the driving shaft and the driven shaft.

It is usual practice to connect a detector such as a rotation angle detector via a shaft coupling to an output shaft of an electric motor such as a servomotor in order to detect the rotational state, such as the rotation angle or rotating speed of the electric motor. It is advantageous in such an arrangement that, in case of failure or at the time of inspection, at least one of the electric motor and the detector can be separated and removed easily, since rapid restoration of the arrangement can then be expected. In such an arrangement in which the electric motor and the detector can be separated, it is required that the shaft coupling can be removed from the shaft easily, and can reduce errors in rotation angle due to deviation of the shaft (eccentricity, angular deviation) and thus can transmit the rotation angle with high precision.

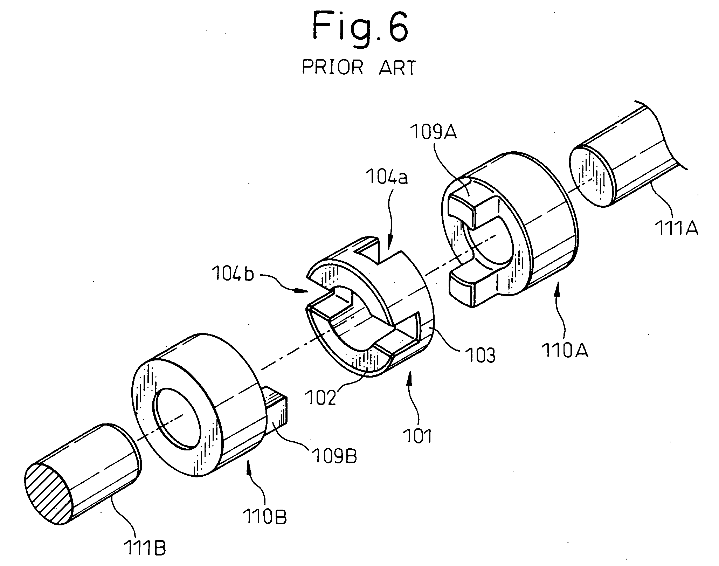

As an example of a shaft coupling that satisfies these requirements, an Oldham's coupling in which a pair of grooves extending orthogonally to each other are engaged with protrusions so as to allow for radial displacement of shafts, has been conventionally known in prior art. Fig 6 is a schematic view useful for explaining the construction of the Oldham's coupling. In Fig. 6, the Oldham's coupling includes a first coupling member or Oldham hub 110A fixed to a driving shaft 111A, a second coupling member or Oldham hub 110B fixed to a driven shaft 111B, and an intermediate member or Oldham slider 101 that interconnects the first and second coupling member 110A and 110B orthogonally to each other. The intermediate member 101 has two grooves 104a and 104b extending orthogonally to each other, and protrusions 109A and 109B formed on the first and second coupling member 110A and 110B, respectively, are slidably inserted into the grooves 104a and 104b, respectively.

The Oldham's coupling has the advantage that it permits a rotational driver (a motor mechanism) and a rotation angle detector in an AC servomotor to be removed easily and has excellent performance in transmitting rotation angle accurately independently of the deviation of shaft centers. The Oldham's coupling has the function of reducing transmission error due to eccentricity and angular deviation of shafts by slidably varying the relative position of the Oldham hubs and the Oldham slider.

It is advantageous that the Oldham slider of the Oldham's coupling is made of plastic material so that the resilience of the Oldham slider can be utilized in inserting the Oldham hub into the Oldham slider so as to eliminate play in the section to be engaged with the metallic Oldham hub as well as to permit easy sliding of the Oldham hub. When, however, the Oldham slider is formed in molding of uniform plastic material, the torsional force exerted at the time of acceleration or deceleration of the motor produces elastic deformation of the slider, leading to a lowering of the precision in the transmission of the rotation angle. On the other hand, when the Oldham slider is formed of uniform metallic material, sufficient slidability cannot be obtained in the case of tight fit with the Oldham hub, and a loose fit is required for good slidability, which leads to difficulty in reducing the lost motion at the time of reversal.

In order to resolve above-described problem associated with the Oldham's coupling, a slider in an Oldham's coupling composed of a disc body and a metallic ring fitted around it has been proposed in Japanese Utility Model Publication No. 62-86418.

Fig. 6 also shows an example of a slider of an Oldham coupling that is composed of a disc body and a metallic ring. The intermediate member or Oldham slider 101 has a disc body 102 and a metallic ring 103 formed around the periphery of the disc body 102 to provide for sufficient strength and durability.

However, the Oldham's coupling proposed in the above-mentioned publication, has a problem in terms of strength which arises from the construction of the Oldham's coupling in which only peripheral portion of the Oldham slider is reinforced with a metallic ring. The boundary between the peripheral portion of the Oldham slider and the metallic ring coincides with the direction of rotation, so that the direction of shearing force due to rotation is parallel to the direction of the direction of the boundary plane. This shearing force has a major influence upon the cohesive strength of the boundary plane.

### SUMMARY OF THE INVENTION

It is an object of the present invention to resolve above-mentioned problem in prior art, in particular, to provide an Oldham slider with increased torsional strength.

In accordance with the present invention, there is provided a coupling for a motor including a first coupling member, a second coupling member and an intermediate member disposed between the first and second coupling members and slidably engaged with the first and second coupling members, wherein the intermediate member includes a slider main body and at least one embedded member embedded in the slider main body, and the embedded member is formed of a material having higher rigidity than the slider main body.

In this coupling, it is preferred that the embedded member is not exposed on engaging portions of the slider main body engaging with the first and second coupling member.

In this coupling, it is advantageous that a contact surface of the embedded member with the slider main body is configured such that at least a part of the contact surface extends in the direction intersecting with the rotating direction of the intermediate member.

The slider main body may include plastic material.

The embedded member may include metal material.

The embedded member may be formed as a circular column.

The embedded member may be formed as a sector column.

It is advantageous that the embedded member and the intermediate member are formed integrally by an insert molding process.

The first coupling member may be associated with an output shaft of a motor, and the second coupling member may be associated with an input shaft of a detector.

### BRIEF DESCRIPTION OF THE DRAWING

The above and other objects, features and advantages of the present invention will be made more apparent from the following description of the preferred embodiments thereof with reference to the accompanying drawings, wherein:
Fig. 1 is a schematic perspective view of the construction of an Oldham's coupling according to the present invention;
Figs. 2A and 2B are a schematic top view and a perspective view, respectively, of a first embodiment of an Oldham slider of the Oldham's coupling according to the invention;
Figs. 3A and 3B are a schematic top view and a perspective view, respectively, of a second embodiment of an Oldham slider of the Oldham's coupling according to the invention;
Figs. 4A and 4B are a schematic top view and a perspective view, respectively, of a third embodiment of an Oldham slider of the Oldham's coupling according to the invention;
Figs. 5A and 5B are a schematic top view and a perspective view, respectively, of a fourth embodiment of an Oldham slider of the Oldham's coupling according to the invention; and
Fig. 6 is a schematic perspective view of one example of an Oldham's coupling of prior art having an Oldham slider including a disc body and a metal ring.

### DETAILED DESCRIPTION

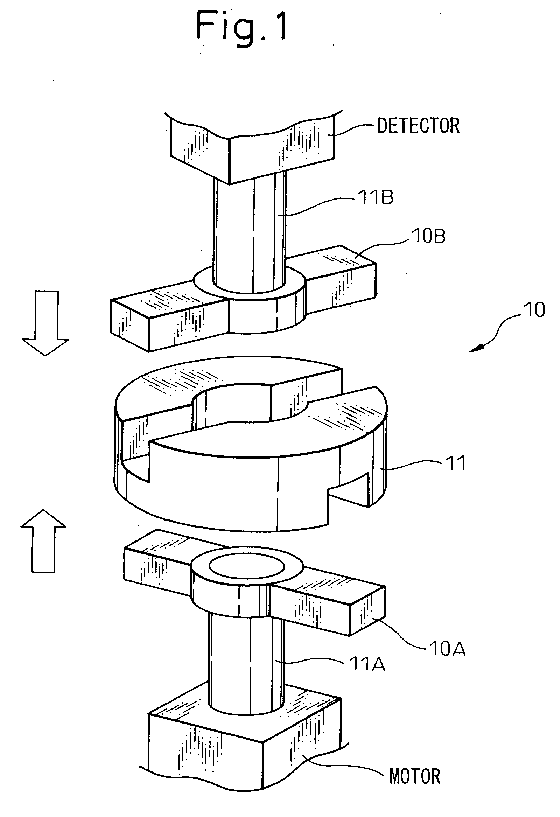

First of all, with reference to Fig. 1, the overall construction of a coupling for a motor according to the present invention is described. A coupling for a motor or an Oldham's coupling 10 includes a first coupling member or Oldham hub 10A fixed to an output or driving shaft 11A of an electric motor, a second coupling member or Oldham hub 10B fixed to an input or driven shaft 11B of a detector, and an intermediate member or Oldham slider 11 disposed between the first and second Oldham hubs 10A and 10B and interconnecting the two Oldham hubs orthogonally to each other, so as to transmit the power of the driving shaft to the driven shaft. Conventional Oldham hubs capable of being applied to the Oldham slider may be used as the first and second Oldham hubs 10A and 10B. Since the above total construction of the Oldham's coupling is common to all embodiments described below, the description of the overall construction is omitted hereafter.

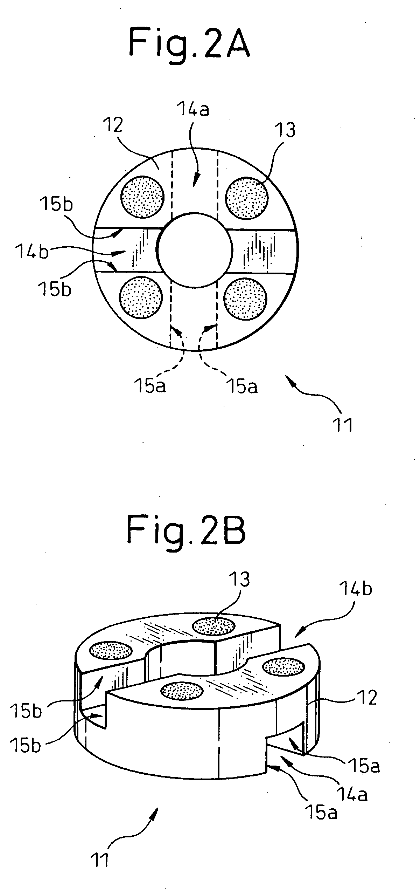

In the following, the structure of the intermediate member or Oldham slider will be described with reference to Figs. 2A to 5B showing first to fourth embodiments of the Oldham slider.

Firstly, a first embodiment of the Oldham slider 11 according to the invention will be described with reference to Figs. 2A and 2B. Fig. 2A is a view showing the slider 11 as seen from the axial direction, and Fig. 2B is a perspective view showing the slider 11.

The Oldham slider 11 includes a slider main body 12 and four embedded members 13 embedded in the slider main body 12. Circular columns are used as the embedded members 13.

The slider main body 12 is made from elastic material such as plastic, and has two opposing faces on which insertion portions or grooves 14a and 14b are formed for slidably holding the unshown first Oldham hub fixed to a driving shaft and the unshown second Oldham hub fixed to a driven shaft, respectively. The insertion groove 14a includes at least two insertion springs or engaging portions 15a for elastically clamping one of the two Oldham hubs between the insertion springs 15a. Similarly, the insertion groove 14b includes at least two insertion springs or engaging portions 15b for elastically clamping the other of the two Oldham hubs between the insertion springs 15b. Since the width of the grooves 14a and 14b is slightly less than the thickness of the Oldham hubs, the insertion springs 15a and 15b can deform elastically for elastically clamping the connected Oldham hubs. Because the slider main body 12 is formed of plastic material, the insertion springs 15a and 15b may be provided with resilience, and can clamp the Oldham hubs such that the two Oldham hubs can slide freely within the grooves 14a and 14b, respectively.

The embedded members 13 are made from of a material having higher rigidity than the slider main body 12. With the higher rigidity of the embedded members 13, the overall rigidity of the Oldham slider 11 is increased. In addition to metal members, for example, which can be used as the material for the embedded members 13, ceramic, or plastic members having higher rigidity than the slider main body 12, can be used as the material for the embedded members.

The embedded members 13 are formed in the shape of circular column, and are embedded with the axis of the circular column oriented in the direction of the axis of the slider main body 12. The embedded members 13 may be fully or partially enclosed by the slider main body 12. In detail, both ends or one end in the axial direction of each of the embedded members 13 may be fully buried in the interior of the slider main body 12, or may be exposed on the surface of the slider main body 12. However, the embedded members 13 should not be exposed on the engaging portions 15a and 15b of the slider main body 12 engaging with the first and second Oldham hubs so as not to degrade the slidability of the Oldham hubs in the grooves 14a and 14b.

The slider main body 12 can be produced efficiently and at low cost by using an insert molding process in which plastic member is molded around the embedded members 13 during injection molding.

By forming the embedded member in the shape of circular column, a contact surface of the embedded members 13 with the slider main body 12 is provided which has an angle relative to the rotating direction of the Oldham slider 11. In other words, at least a part of the contact surface extends in the direction intersecting with the rotating direction of the slider 11. Therefore, the force produced between the embedded members 13 and the slider main body 12 when the Oldham slider 11 is rotated is converted into a component parallel and a component perpendicular to the contact surface. The component parallel to the contact surface is shearing force that acts so as to separate the embedded members 13 from the slider main body 12. Since the force produced by rotation is converted into the component parallel and the component perpendicular to the contact surface, the shearing force produced by rotation can be decreased, and the rigidity of the Oldham slider 11 can be thereby increased.

Any number of the embedded members 13 may be used. As regards arrangement of the embedded members 13 in the slider main body 12, in view of maintaining proper rotational balance of the slider main body 12, a suitable construction is such that the embedded members 13 are arranged at a predetermined equal interval on a same circumference coaxially with the slider main body 12, as shown in Figs. 2A and 2B.

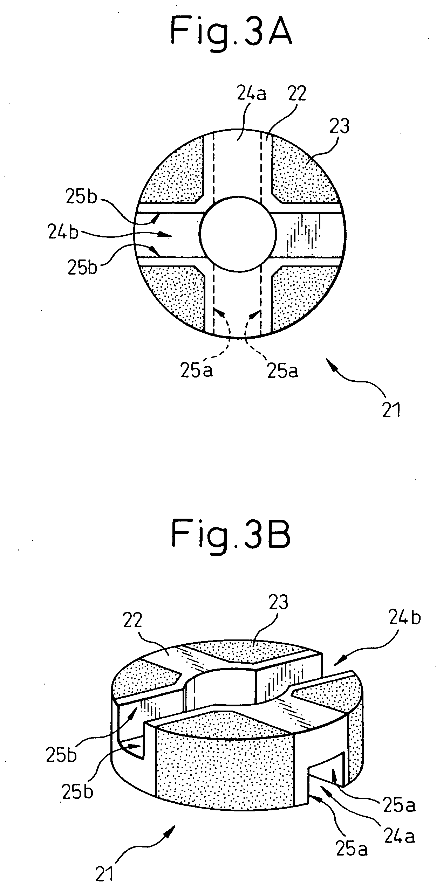

Next, a second embodiment of the Oldham slider 21 according to the invention will be described with reference to Figs. 3A and 3B. Fig. 3A is a view showing the slider 21 as seen from the axial direction, and Fig. 3B is a perspective view showing the slider 21.

The Oldham slider 21 includes a slider main body 22 and four embedded members 23 embedded in the slider main body 22. Sector columns are used as the embedded members 23. A sector column is a columnar body having sector-shaped cross section.

Similarly to the first embodiment, the slider main body 22 is made from elastic material such as plastic, and has two opposing faces on which insertion portions or grooves 24a and 24b are formed for slidably holding the unshown first Oldham hub fixed to a driving shaft and the unshown second Oldham hub fixed to a driven shaft, respectively. The insertion groove 24a includes at least two insertion springs or engaging portions 25a for elastically clamping one of the two Oldham hubs between the insertion springs 25a. Similarly, the insertion groove 24b includes at least two insertion springs or engaging portions 25b for elastically clamping the other of the two Oldham hubs between the insertion springs 25b. Since the width of the grooves 24a and 24b is slightly less than the thickness of the Oldham hubs, the insertion springs 25a and 25b can deform elastically for elastically clamping the connected Oldham hubs. Because the slider main body 22 is formed of plastic material, the insertion springs 25a and 25b may be provided with resilience, and can clamp the Oldham hubs such that the two Oldham hubs can slide freely within the grooves 24a and 24b, respectively.

The embedded members 23 are made from of a material having higher rigidity than the slider main body 22. With the higher rigidity of the embedded members 23, the overall rigidity of the Oldham slider 21 is increased. In addition to metal members, for example, which can be used as the material for the embedded members 23, ceramic, or plastic members having higher rigidity than the slider main body 22, can be used as the material for the embedded members.

The embedded members 23 are formed in the shape of sector column, and are embedded, for example, into four regions formed by the two grooves 24a and 24b, with the axis of the sector column oriented in the direction of the axis of the slider main body 22. The curved surface of the sector column of each of the embedded members 23 is arranged in parallel to the outer peripheral surface of the slider main body 22. The embedded members 23 may be fully or partially enclosed by the slider main body 22. In detail, the curved surface may be fully buried in the interior of the slider main body 22, or it may be exposed on the outer surface of the slider main body 22. Also, both ends or one end in the axial direction of each of the embedded members 23 may be fully buried in the interior of the slider main body 22, or may be exposed on the surface of the slider main body 22. However, the embedded members 23 should not be exposed on the engaging portions 25a and 25b of the slider main body 22 engaging with the first and second Oldham hubs so as not to degrade the slidability of the Oldham hubs in the grooves 24a and 24b.

As in the first embodiment, the slider main body 22 can be produced efficiently and at low cost by using an insert molding process in which plastic member is molded around the embedded members 23 during injection molding.

By forming the embedded members 23 in the shape of circular column, a contact surface of the embedded members 23 with the slider main body 22 is provided which has an angle relative to the rotating direction of the Oldham slider 21. In other words, at least a part of the contact surface extends in the direction intersecting with the rotating direction of the slider 21. Therefore, the force produced between the embedded members 23 and the slider main body 22 when the Oldham slider 21 is rotated is converted into a component parallel and a component perpendicular to the contact surface. The component parallel to the contact surface is shearing force that acts so as to separate the embedded member 23 from the slider main body 22. Since the force produced by rotation is converted into the component parallel and the component perpendicular to the contact surface, the shearing force produced by rotation can be decreased, and the rigidity of the Oldham slider 21 can be thereby increased.

Any number of the embedded members 23 may be used. The sector columns as shown in Figs. 3A and 3B may be divided in axial direction. As regards arrangement of the embedded members 23 in the slider main body 22, in view of maintaining proper rotational balance of the slider main body 22, a suitable construction is such that the embedded members 23 are arranged in the four regions formed by two grooves 24a and 24b, as shown in Figs. 3A and 3B.

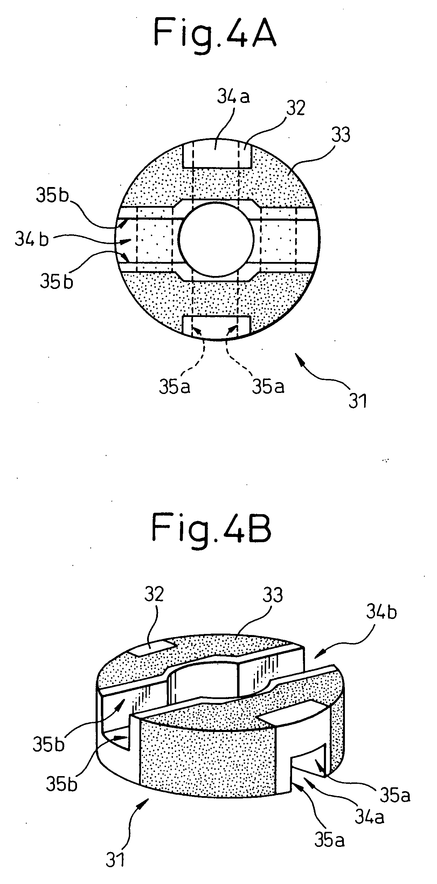

Next, a third embodiment of the Oldham slider 31 according to the invention will be described with reference to Figs. 4A and 4B. Fig. 4A is a view showing the slider 31 as seen from the axial direction, and Fig. 4B is a perspective view showing the slider 31.

The Oldham slider 31 includes a slider main body 32 and an embedded member 33 embedded in the slider main body 32. Interconnected four sector columns are used as the embedded member 33. Each sector column is a columnar body having sector-shaped cross section, as in the second embodiment.

Similarly to the first and second embodiments, The slider main body 32 is made from elastic material such as plastic, and has two opposing faces on which insertion portions or grooves 34a and 34b are formed for slidably holding the unshown first Oldham hub fixed to a driving shaft and the unshown second Oldham hub fixed to a driven shaft, respectively. The insertion groove 34a includes at least two insertion springs or engaging portions 35a for elastically clamping one of the two Oldham hubs between the insertion springs 35a. Similarly, the insertion groove 34b includes at least two insertion springs or engaging portions 35b for elastically clamping the other of the two Oldham hubs between the insertion springs 35b. Since the width of the grooves 34a and 34b is slightly less than the thickness of the Oldham hubs, the insertion springs 35a and 35b can deform elastically for elastically clamping the connected Oldham hubs. Because the slider main body 32 is formed of plastic material, the insertion springs 35a and 35b may be provided with resilience, and can clamp the Oldham hubs such that the two Oldham hubs can slide freely within the grooves 34a and 34b, respectively.

The embedded member 33 is made from of a material having higher rigidity than the slider main body 32. With the higher rigidity of the embedded member 33, the overall rigidity of the Oldham slider 31 is increased. In addition to metal members, for example, which can be used as the material for the embedded member 33, ceramic, or plastic members having higher rigidity than the slider main body 32, can be used as the material for the embedded members.

The embedded member 33 is constructed by bridging to interconnect four sector columns. Each sector column is embedded, for example, into one of the four regions formed by two orthogonal grooves 34a and 34b, with its axis oriented in the direction of the axis of the slider main body 32. The curved surfaces of the sector columns of the embedded member 33 are arranged in parallel to the outer peripheral surface of the slider main body 32. The embedded member 33 may be fully or partially enclosed by the slider main body 32. In detail, the curved surfaces may be fully buried in the interior of the slider main body 32, or it may be exposed on the outer surface of the slider main body 32. Also, both ends or one end in the axial direction of the embedded member 33 may be fully buried in the interior of the slider main body 32, or may be exposed on the surface of the slider main body 32. However, the embedded members 33 should not be exposed on the engaging portions 35a and 35b of the slider main body 32 engaging with the first and second Oldham hubs so as not to degrade the slidability of the Oldham hubs in the grooves 34a and 34b. Adjoining sector columns are interconnected to each other by bridging, and the four sector columns are formed into one integral embedded member by bridging.

As in the first and second embodiments, the slider main body 32 can be produced efficiently and at low cost by using an insert molding process in which plastic member is molded around the embedded member 33 during injection molding.

By forming the embedded member 33 in the shape of sector column, a contact surface of the embedded member 33 with the slider main body 32 is provided which has an angle relative to the rotating direction of the Oldham slider 31. In other words, at least a part of the contact surface extends in the direction intersecting with the rotating direction of the slider 31. Therefore, the force produced between the embedded member 33 and the slider main body 32 when the Oldham slider 31 is rotated, is converted into a component parallel and a component perpendicular to the contact surface. The component parallel to the contact surface is shearing force that acts so as to separate the embedded member 33 from the slider main body 32. Since the force produced by rotation is converted into the component parallel and the component perpendicular to the contact surface, the shearing force produced by rotation is decreased, and the rigidity of the Oldham slider 31 can be thereby increased.

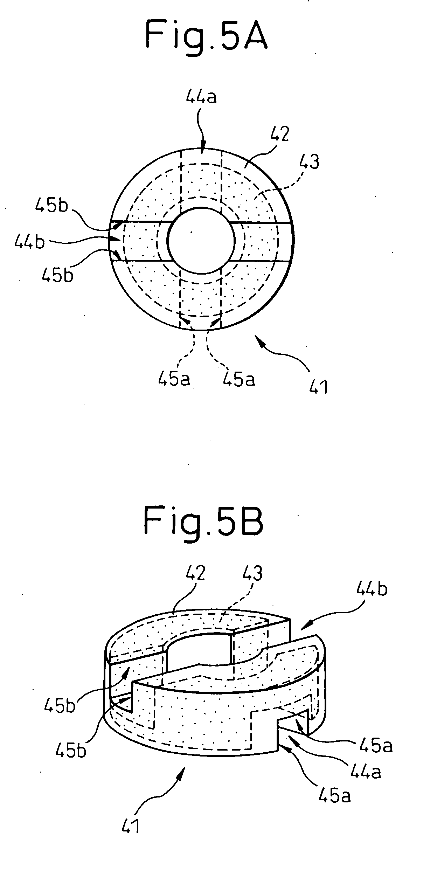

Next, a fourth embodiment of the Oldham slider 41 according to the invention will be described with reference to Figs. 5A and 5B. Fig. 5A is a view showing the slider 41 as seen from the axial direction, and Fig. 5B is a perspective view showing the slider 41.

The Oldham slider 41 includes a slider main body 42 and an embedded member 43 embedded in the slider main body 42. An annular member is used as the embedded member 43.

Similarly to the first, second and third embodiments, The slider main body 42 is made from elastic material such as plastic, and has two opposing faces on which insertion portions or grooves 44a and 44b are formed for slidably holding the unshown first Oldham hub fixed to a driving shaft and the unshown second Oldham hub fixed to a driven shaft, respectively. The insertion groove 44a includes at least two insertion springs or engaging portions 45a for elastically clamping one of the two Oldham hubs between the insertion springs 45a. Similarly, the insertion groove 44b includes at least two insertion springs or engaging portions 45b for elastically clamping the other of the two Oldham hubs between the insertion springs 45b. Since the width of the grooves 44a and 44b is slightly less than the thickness of the Oldham hubs, the insertion springs 45a and 45b can deform elastically for elastically clamping the connected Oldham hubs. Because the slider main body 42 is formed of plastic material, the insertion springs 45a and 45b may be provided with resilience, and can clamp the Oldham hubs such that the two Oldham hubs can slide freely within the grooves 44a and 44b, respectively.

The embedded member 43 is formed of a material having higher rigidity than the slider main body 42. With the higher rigidity of the embedded member 43, the overall rigidity of the Oldham slider 41 is increased. In addition to metal members, for example, which can be used as the material for the embedded member 43, ceramic, or plastic members having higher rigidity than the slider main body 42, can be used as the material for the embedded members.

The embedded member 43 is composed of an annular member. The annular member is provided around the axial center along the shape of the grooves 44a and 44b so as to form an overall shape of a ring around the center axis. The surface of the groove parallel to the direction of the axis forms a surface having an angle relative to the rotating direction of the slider main body 42.

The outer or inner peripheral surface of the embedded member 43 may be the outer peripheral surface of the slider main body 42 itself or may be a curved surface parallel to it. The embedded member 43 may be fully or partially enclosed by the slider main body 42. In detail, this curved surface may be fully buried in the interior of the slider main body 42, or it may be exposed on the surface of the slider main body 42. Also, both ends or one end in the axial direction of the embedded member 43 may be fully buried in the interior of the slider main body 42 or may be exposed on the surface of the slider main body 42. However, the embedded members 43 should not be exposed on the engaging portions 45a and 45b of the slider main body 42 engaging with the first and second Oldham hubs so as not to degrade the slidability of the Oldham hubs in the grooves 44a and 44b.

As in the first, second and third embodiments, the slider main body 42 can be produced efficiently and at low cost by using an insert molding process in which plastic member is molded around the embedded member during injection molding of plastic material.

The surface of the annular member that comes in contact with the portion of the slider main body 42 which extends along the shape of the grooves 44a and 44b, has an angle relative to the rotating direction of the Oldham slider 41. In other words, at least a part of the contact surface extends in the direction intersecting with the rotating direction of the slider 41. Therefore, the force produced between the embedded member 43 and the slider main body 42 when the Oldham slider 41 is rotated, is converted into a component parallel and a component perpendicular to the contact surface. The component parallel to the contact surface is shearing force that acts so as to separate the embedded member 43 from the slider main body 42. Since the force produced by rotation is converted into the component parallel and the component perpendicular to the contact surface, the shearing force produced by rotation is decreased, and the rigidity of the Oldham slider 41 can be thereby increased.

With this configuration of the coupling according to the present invention, the strength of the coupling against the stress produced by rotation of the Oldham slider can be increased by embedding at least one embedded member formed of a metal member having higher rigidity than the material of the plastic member that constitute the slider main body of the Oldham slider. In addition, by providing a contact surface between the slider main body and the embedded member such that at least a part of the surface has an angle or extends in the direction intersecting with the rotating direction, the component of shearing force that is parallel to the contact surface is decreased, and resistance to rotating force can be thereby increased. Since the slider main body is formed of plastic material, torsional rigidity can be increased without changing the elastic force and slidability of the grooves to which the Oldham hubs is fitted.

When the Oldham hub is mounted on the Oldham slider, if the spring of the insertion groove is too strong, the required slidability may not be achieved, while if the spring is too weak, play may occur. With the shape of the coupling according to the present invention, the spring force of the insertion groove is not significantly affected by the embedded member, so that the slidability of the Oldham hub in the Oldham slider is not degraded. On the other hand, in the construction such that the slider main body is surrounded by a metal ring which acts as a part of the spring of the insertion groove, the spring force of the insertion groove may become so strong that the required slidability may be degraded. With this configuration of the coupling according to the present invention, the overall rigidity of the Oldham slider can be increased while the same slidability is achieved as when the slider main body is formed entirely of plastic material.

The conventional shaft coupling including the metallic ring has a disadvantage in terms of the productivity and cost in forming the coupling, because a molding step of molding synthetic resin material to the metallic ring and a cutting step for forming grooves are required, thereby increasing the number of production steps. However, with this configuration of the coupling according to the present invention, embedding of the embedded member into the slider main body may be carried out by using an insert molding process so that number of production steps can be decreased, production efficiency can be improved and production cost can be lowered. Also, dimensional accuracy can be increased as compared to a cutting and machining process.

While the invention has been described with reference to specific embodiments chosen for the purpose of illustration, it should be apparent that numerous modification could be made thereto by those skilled in the art without departing from the basic concept and scope of the invention.

## Claims

1. A coupling for a motor comprising a first coupling member, a second coupling member and an intermediate member disposed between the first and second coupling members and slidably engaged with the first and second coupling members, wherein the intermediate member comprises a slider main body and at least one embedded member embedded in the slider main body, and the embedded member is formed of a material having higher rigidity than the slider main body.

2. A coupling for a motor as set forth in claim 1, wherein the embedded member is not exposed on engaging portions of the slider main body engaging with the first and second coupling member.

3. A coupling for a motor as set forth in claim 1, wherein a contact surface of the embedded member with the slider main body is configured such that at least a part of the contact surface extends in the direction intersecting with the rotating direction of the intermediate member.

4. A coupling for a motor as set forth in claim 1, wherein the slider main body comprises plastic material.

5. A coupling for a motor as set forth in claim 1, wherein the embedded member comprises metal material.

6. A coupling for a motor as set forth in claim 1, wherein the embedded member is formed as a circular column.

7. A coupling for a motor as set forth in claim 1, wherein the embedded member is formed as a sector column.

8. A coupling for a motor as set forth in claim 1, wherein the embedded member and the intermediate member are formed integrally by an insert molding process.

9. A coupling for a motor as set forth in claim 1, wherein the first coupling member is associated with an output shaft of a motor, and the second coupling member is associated with an input shaft of a detector.
